# EUROPÄISCHE PATENTSCHRIFT

(11) **EP 0 979 189 B1**
(45) Veröffentlichungstag und Bekanntmachung des Hinweises auf die Patenterteilung: **23.08.2006**
(21) Anmeldenummer: 98906959.6
(22) Anmeldetag: 18.02.1998
(51) Int. Cl.: B60T 8/88

(54) **SCHALTUNGSANORDNUNG FÜR EIN KRAFTFAHRZEUG-REGELUNGSSYSTEM**
CIRCUIT CONFIGURATION FOR A MOTOR VEHICLE CONTROL SYSTEM
DISPOSITIF DE COMMUTATION POUR SYSTEME DE REGULATION POUR VEHICULE A MOTEUR

(30) Priorität: 28.04.1997 DE 19717686
(43) Veröffentlichungstag der Anmeldung: 16.02.2000
(73) Patentinhaber: Continental Teves AG & Co. oHG, 60488 Frankfurt am Main (DE)
(72) Erfinder: GIERS, Bernhard, D-60320 Frankfurt am Main (DE)
(74) Vertreter: Brand, Markus
(86) Internationale Anmeldenummer: PCT/EP1998/000922
(87) Internationale Veröffentlichungsnummer: WO 1998/049038

(56) Entgegenhaltungen:
- DE-A- 4 122 016
- DE-A- 4 339 570
- DE-A- 4 341 082
- DE-A- 19 509 150
- DE-A- 19 607 429

## Beschreibung

Die Erfindung bezieht sich auf eine Schaltungsanordnung, die für ein Kraftfahrzeug-Regelungssystem für sicherheitskritische Regelungen, wie ABS, ASR, ASMS, Brake-by-wire, Fahrwerksregelungen etc., vorgesehen ist und ein Mikrocomputer-System aufweist, welches die Eingangsdaten oder Eingangsinformationen des Regelungssystems verarbeitet und bei Auftreten eines Fehlers ein Fehlererkennungssignal liefert.

Zu den sicherheitskritischen Regelungen dieser Art zählen u.a. die in die Bremsenfunktion eines Kraftfahrzeugs eingreifenden Regelungssysteme, die in großer Anzahl und großer Vielfalt auf dem Markt sind. Beispiele hierfür sind die Antiblockiersysteme (ABS), Antriebsschlupfregelungssysteme (ASR), Fahrstabilitätsregelungen (FDR,ASMS), Fahrwerksregelungssysteme etc. Ein Ausfall eines solchen Regelungssystems führt zur Gefährdung der Fahrstabilität des Fahrzeugs. Daher wird die Funktionsfähigkeit der Systeme ständig überwacht, um beim Auftreten eines Fehlers die Regelung abschalten oder in einen für die Sicherheit weniger gefährlichen Zustand umschalten zu können.

Noch kritischer sind Bremssysteme bzw. Kraftfahrzeug-Regelungssysteme, bei denen bei Ausfall der Elektronik keine Um schaltung auf ein mechanisches oder hydraulisches System mög lich ist. Hierzu zählen Bremssystemkonzepte, wie "Brake-by-wire", die voraussichtlich in der Zukunft noch an Bedeutung gewinnen werden; die Bremsenfunktion ist bei solchen Systemen auf eine intakte Elektronik angewiesen.

Ein Beispiel für eine Schaltungsanordnung zur Steuerung und Überwachung einer blockiergeschützten Fahrzeugbremsanlage der eingangs genannten Art ist aus der gattungsgemäßen DE 32 34 637 C2 bekannt. Mit dieser Schaltung werden die Eingangsdaten des Kfz- Regelungssystems in zwei identisch programmierten Mikrocomputern parallel und synchron verarbeitet, um durch Vergleich der Ausgangsdaten beider Systeme eine ordnungsgemäße Funktion und das Auftreten von Fehlern erkennen zu können; bei ordnungsgemäßer Datenverarbeitung müssen nämlich an den Ausgängen beider Mikrocomputer identischen Signale anliegen. Beim Auftreten einer Störung oder Fehlfunktion, d.h. bei voneinander abweichenden Ausgangssignalen, wird dann das gesamte Regelungssystem abgeschaltet. Eine solche Vorgehensweise, nämlich das vollständige Abschalten der Regelung beim Auftreten eines Fehlers, setzt voraus, daß auch nach dem Abschalten der Regelung die Bremsenanlage sicher funktioniert, wenn auch ungeregelt.

Nach einem anderen, aus der DE 41 37 124 A1 bekannten System, werden die Eingangsdaten ebenfalls zwei Microcomputern parallel zugeführt, von denen jedoch nur einer die vollständige, aufwendige Signalverarbeitung ausführt. Der zweite Mi crocomputer dient vornehmlich zur Überwachung, weshalb die Eingangssignale mit Hilfe vereinfachter Regelalgorithmen und vereinfachter Regelphilosophie weiterverarbeitet werden können. Die vereinfachte Datenverarbeitung reicht zur Erzeugung von Signalen aus, die durch Vergleich mit den in dem aufwendigeren Microcomputer verarbeiteten Signalen Rückschlüsse auf den ordnungsgemäßen Betrieb des Systems zulassen. Durch die Verwendung eines Prüf-Microcomputers geringerer Leistungsfähigkeit läßt sich der Herstellungsaufwand im Vergleich zu einem System mit zwei vollständigen, aufwendigen Microcomputern gleicher Leistung reduzieren.

Aus der DE 43 41 082 A1 ist bereits ein Mikroprozessorsystem bekannt, das insbesondere für das Regelsystem einer blokkiergeschützten Bremsanlage vorgesehen ist. Dieses bekannte System, das auf einem einzigen Chip untergebracht werden kann, enthält zwei Zentraleinheiten, in denen die Eingangsdaten parallel verarbeitet werden. Die Festwert- und die Schreib-Lese-Speicher, die an die beiden Zentraleinheiten angeschlossen sind, enthalten zusätzliche Speicherplätze für Prüfinformationen und umfassen jeweils einen Generator zur Erzeugung von Prüfinformationen. Die Ausgangssignale eines der beiden Zentraleinheiten werden zur Erzeugung der Steuersignale weiterverarbeitet, während die andere als passive Zentraleinheit lediglich zur Überwachung der aktiven Zentraleinheit dient.

Schließlich ist aus der DE 195 29 434 A1 ein Mikroprozessorsystem bekannt, bei dem auf einem oder auf mehreren Chips zwei synchron betriebene Zentraleinheiten angeordnet sind, die die gleichen Eingangsinformationen erhalten und das gleiche Programm abarbeiten. Die beiden Zentraleinheiten sind über separate Bus-Systeme an die Festwert- und an die Schreib-Lese-Speicher sowie an Eingabe- und Ausgabeeinheiten angeschlossen. Die Bus-Systeme sind untereinander durch Bypässe verbunden, die den beiden Zentraleinheiten ein gemeinsames Lesen und Abarbeiten der zur Verfügung stehenden Daten, einschließlich der Prüfdaten oder Redundanzdaten, und der Befehle ermöglichen. Dieses bekannte, auf redundante Datenverarbeitung beruhende System ermöglicht eine Einsparung von Speicherplätzen, was wiederum zu einer Reduzierung des Herstellungsaufwandes führt.

Alle vorgenannten Systeme beruhen grundsätzlich auf dem Vergleich redundant verarbeiteter Daten und der Erzeugung eines Fehlersignals, wenn Abweichungen zwischen den Datenverarbeitungsergebnissen oder -zwischenergebnissen auftreten. Bei Fehlererkennung, d.h. bei Auftreten eines Fehlers oder Ausfall eines Systems, wird dann die Regelung abgeschaltet. In keinem Fall ist eine Notlauffunktion, nämlich eine Fortsetzung der Regelung nach dem Auftreten des Fehlers, möglich, weil bei der beschriebenen Art der Fehlererkennung nicht festgestellt werden kann, welches System noch intakt ist. Eine Notlauffunktion auf Basis solcher bekannten Schaltungen wäre grundsätzlich nur durch Verdoppelung der redundanten Systeme in Verbindung mit einem Identifizieren und Abschalten der Fehlerquelle denkbar.

Der vorliegenden Erfindung liegt nun die Aufgabe zugrunde, eine Schaltungsanordnung zu entwickeln, die im Vergleich zu den beschriebenen bekannten Verfahren höchstens geringen Mehraufwand erfordert und die dennoch beim Auftreten eines Fehlers einen Übergang in eine Notlauffunktion zuläßt.

Es hat sich herausgestellt, daß diese Aufgabe durch die im Anspruch 1 beschriebene Schaltungsanordnung gelöst werden kann. Nach den kennzeichnenden Merkmalen der Erfindung ist die Schaltungsanordnung zwei- oder mehrkreisig aufgebaut, wobei jeder Kreis ein komplettes Mikroprozessorsystem enthält, welches die Eingangsdaten oder Eingangsinformationen verarbeitet und bei Auftreten eines Fehlers ein Fehlererkennungssignal liefert; bei Fehlererkennung erfolgt dann ein Übergang in eine Notlauffunktion.

Nach einem besonders vorteilhaften Ausführungsbeispiel der Erfindung werden in jedem Mikroprozessorsystem die Eingangsdaten dieses Systems redundant verarbeitet und die Datenverarbeitungsergebnisse oder Zwischenergebnisse verglichen, und es wird beim Auftreten von Abweichungen zwischen den Ergebnissen das Fehlererkennungssignal erzeugt.

Die erfindungsgemäße Schaltungsanordnung läßt sich sehr einfach auf Basis bekannter Schaltungen, z.B. der zuvor geschilderten bekannten Systeme oder Schaltungen, die ein Fehlererkennungssignal liefern, realisieren. Wichtig ist, daß nicht nur das Auftreten eines Fehlers signalisiert wird, sondern daß auch erkennbar ist, welches System oder welcher Kreis fehlerbehaftet bzw. weiterhin intakt ist.

Nach einem weiteren Ausführungsbeispiel der Erfindung werden jedem Kreis oder Mikroprozessorsystem nur die für den betreffenden Kreis benötigten Eingangsdaten zugeführt. Bei Ausfall des Kreises und Übergang in die Notlauffunktion fällt dann der Kreis, in dem der Fehler auftrat, aus. Die Aktuatoren des betreffenden Kreises werden nicht mehr angesteuert. Handelt es sich beispielsweise um eine Kraftfahrzeug-Bremsanlage mit diagonaler Bremsaufteilung, genügt es, in der Notlauffunktion die Bremsen eines Kreises zu betätigen. Es entsteht die gleiche Situation wie beim Ausfall eines hydraulischen Bremskreises einer bekannten, zweikreisigen Bremsanlage mit diagonaler Aufteilung.

Gemäß der Erfindung werden jedem Kreis oder jedem Mikroprozessorsystem alle Eingangsdaten direkt oder über Kommunikationseinheiten, die die einzelnen Mikroprozessorsystemen verbinden, zugeführt und bei Ausfall eines Kreises wird durch Anschalten der Aktuatorbetätigung an einen der intakten Kreise die Aktuatoransteuerung in der Notlauffunktion ohne Einschränkungen fortgesetzt.

Auch hat es sich als zweckmäßig erwiesen, die erfindungsgemäße Schaltungsanordnung für eine Kombination von mehreren Kraftfahrzeug-Regelungssystemen, wie Brake-by-wire, ABS, ASR, ASMS etc., auszulegen, wobei die Notlauffunktion entweder die Aufrechterhaltung des Betriebs aller Regelungssysteme oder nur die Aufrechterhaltung des Betriebs ausgewählter Regelungsfunktionen, z.B. besonders sicherheitskritischer Funktionen, erfaßt. Dabei ist es vorteilhaft, wenn im Fehlerfall diese speziellen Funktionen durch die intakten Kreise übernommen werden.

Einige weitere Ausführungsbeispiele sind in den Unteransprüchen beschrieben.

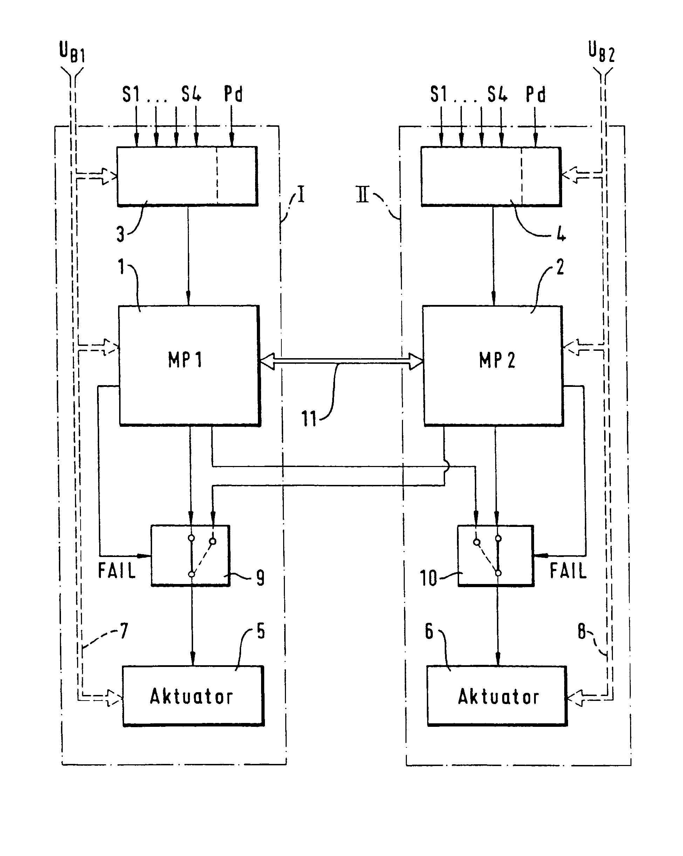

Aus der beigefügten Abbildung, die in schematisch vereinfachter Darstellung die wichtigsten Komponenten einer Schaltungsanordnung nach der Erfindung wiedergibt, und aus der folgenden Erläuterung gehen weitere Einzelheiten der Erfindung sowie der prinzipielle Aufbau und die Wirkungsweise einer Schaltungsanordnung nach der Erfindung hervor.

Die dargestellte Schaltungsanordnung ist beispielsweise zur Steuerung und Regelung einer blockiergeschützten Kraftfahrzeug-Bremsanlage und insbesondere einer rein elektrischen, nach dem Brake-by-Wire-Konzept aufgebauten Bremsanlage geeignet. Eine Abschaltung der Elektronik und "Rückfall" in eine (hydraulische oder mechanische)Grundfunktion ist bei solchen Bremsanlagen, die rein elektrisch funktionieren, prinzipbedingt nicht möglich. Beim Auftreten eines Fehlers ist folglich eine Notlauffunktion, die eine weitere Bremsbetätigung zuläßt, unbedingt notwendig.

Die wiedergegebene Schaltungsanordnung besteht im Prinzip aus zwei vollständigen, voneinander unabhängigen Kreisen I, II mit den Mikroprozessorsystemen 1,2, zu denen jeweils auch eine Eingangsdaten oder Eingangsinformationen aufnehmende und erfassende Schaltung 3,4 sowie eine die Ausgangssignale der Mikroprozessorsysteme 1,2 auswertende Aktuatorbetätigung 5,6 gehören. Ein weiterer, nicht verzichtbarer Bestandteil der erfindungsgemäßen Schal tungsanordnung ist die individuelle Energieversorgung 7,8, die hier als Zuführungsleitung zu den einzelnen Komponenten der beiden dargestellten Kreise I,II oder Mikroprozessorsystemen 1,2 durch gestrichelte Doppellinie symbolisiert ist.

Die zusammen einen Kreis I,II bildenden Komponenten der erfindungsgemäßen Schaltungsanordnung sind in der Abbildung durch einen strich-punktierten Rahmen zusammengefaßt. Jeder Kreis I, II enthält ein komplettes Mikroprozessorsystem, einschließlich der Peripherie. Zum Kreis I gehören folglich die Komponenten 1,3, ein Umschalter 9 und die Energieversorgung 7, zum Kreis II die Komponenten 2,4, ein Umschalter 10 und die Energieversorgung 8. Bei einer Bremsanlage werden zweckmäßigerweise die beiden Kreise I, II jeweils zur Steuerung der Bremsen einer Fahrzeugdiagonalen zugeordnet.

Bei einer Kraftfahrzeug-Bremsanlage liefern die Radsensoren die wichtigsten Eingangsgrößen des Regelungssystems. Folglich dienen die Eingangsschaltungen 3,4 zur Erfassung der Radsensordaten. Als Aktuatoren kommen Ventile oder, bei einem Brake-by-wire-Konzept, Elektromotoren, die die einzelnen Radbremsen betätigen, in Frage. Zur Versorgung mit elektrischer Energie können die Quellen 7,8 sogar aus getrennten Fahrzeug-Batterien U_{B1}, U_{B2} oder aus getrennten Batteriezellen versorgt werden.

Die Signalwege oder Datenwege von den Mikroprozessorsystemen 1 und 2 zu den zugehörigen Aktuatorbetätigungen 5,6 führen nach der Darstellung jeweils über einen der Umschalter 9,10. In der Ruhestellung des Umschalters ist die Verbindung von dem Mikroprozessorsystem 1,2 zu der zugehörigen Aktuatorbetätigung 5,6 geschlossen. Beim Auftreten eines Fehlererkennungssignals FAIL, das der fehlerbehaftete Kreis bzw. das Mikroprozessorsystem I oder II, in dem der Fehler auftritt, ausgibt, wird der Umschalter 9 oder 10 in seine zweite Schaltposition umgelegt, in der die Ansteuerung der Aktuatoren des defekten Kreises I oder II von dem intakten Kreis II oder I übernommen wird. Werden dem intakten Mikroprozessorsystem alle Eingangsdaten zugeführt, kann auch nach der Umlegung des Umschalters 9 oder 10 und damit nach dem Übergang in die Notlauffunktion die Bremsenbetätigung uneingeschränkt fortgesetzt werden.

Die Anschlüsse S1 bis S4 der Signalerfassung 3,4 symbolisieren die Eingänge zur Aufnahme der Radsensordaten. Ein Eingang Pd dient bei einem Brake-by-wire-Konzept zur Entgegennahme der Bremspedal-Betätigungsdaten.

Ein eindeutiges Fehlererkennungssignal läßt sich bekanntlich bei Verwendung eines Mikroprozessorsystems mit redundanter Signalverarbeitung durch Vergleich der Datenverarbeitungsergebnisse oder -zwischenergebnisse erzeugen. Beim Vorliegen eines Fehlers ist die Übereinstimmung nicht mehr gegeben. Dieses Signal wird erfindungsgemäß zum Umschalten in die Notlauffunktion ausgewertet.

Die zu den Kreisen I,II gehörenden Mikroprozessorsysteme 1,2 sind durch eine Kommunikation-Einrichtung 11 miteinander verbunden. Über diesen Weg besteht ein Datenaustausch, der sicherstellt, daß alle Eingangsdaten und auch Zwischenergebnisse der Datenverarbeitung in beiden Mikroprozessorsystemen 1,2 verarbeitet und ausgewertet werden können. Über diese Kommunikations-Einrichtung 11 können außerdem in bekannter Weise vielfältige Überwachungsmaßnahmen realisiert werden.

Ein wesentlicher Vorteil der erfindungsgemäßen Schaltungsanordnung besteht darin, daß diese aus zwei gleichartigen Kreisen I,II mit redundanter Datenverarbeitung besteht. Jeder Kreis I oder II kann für ein Regelungssystem eingesetzt werden, bei dem im Fehlerfall bei Abschaltung der Elektronik oder der Aktuatorbetätigung eine mechanische oder hydraulische Notlauffunktion gegeben ist. Bei dem beschriebenen Ausführungsbeispiel der Erfindung, das ein elektrisch zweikreisiges System I, II darstellt, wird beim Auftreten eines Fehlers entweder ein Kreis I oder II abgeschaltet oder die Aktuatorbetätigung dieses Kreises von dem intakten Kreis übernommen. Beide Maßnahmen führen zu einer Notlauffunktion; die erste Maßnahme zu einer Notlauffunktion unter Inkaufnahme eine Bremswegverlängerung etc., während die zweite Maßnahme die Bremsenfunktion uneingeschränkt aufrechterhält und lediglich die Funktionssicherheit beim (relativ unwahrscheinlichen) Auftreten noch weiterer Fehler beeinträchtigt und damit das Sicherheitsniveau reduziert.

Es ist grundsätzlich auch möglich, die Übernahme der Aktuatorbetätigung als Folge einer Fehlererkennung auf besonders kritische Regelungsfunktionen zu beschränken. Dies ist insbesondere dann zweckmäßig, wenn die beschriebene Schaltungsanordnung eine Kombination mehrerer, sicherheitskritischer und weniger sicherheitskritischer Regelungssysteme oder Regelungsfunktionen umfaßt. Während des Notlaufs sollte dann zumindest eine konventionelle oder Standardbremsfunktion gewährleistet sein.

Das Betätigen der Umschalter 9,10, die durch Hardware- aber auch durch Software realisiert werden können, setzt die Fehlererkennung und Identifikation der Fehlerquelle oder des Fehlerortes voraus. Grundsätzlich ist es möglich, das Umschalten von einer Majoritätsentscheidung abhängig zu machen, wenn die Datenverarbeitung auf mehr als zwei (redundanten) Wegen erfolgt. Im beschriebenen Beispiel werden in jedem der beiden Mikroprozessorsystemen 1,2 die Daten redundant verarbeitet, so daß jedes System allein zur Fehlererkennung und -signalisierung in der Lage ist. Es genügt zu wissen, in welchem Kreis oder Mikroprozessorsystem der Fehler auftritt.

## Patentansprüche

1. Schaltungsanordnung für ein Kraftfahrzeug-Regelungssystem, insbesondere für sicherheitskritische Regelungen, wie ABS, ASR, ASMS, Brake-by-wire etc., mit einem Mikrocomputer-System, welches die Eingangsdaten oder Eingangsinformationen des Regelungssystems verarbeitet und bei Auftreten eines Fehlers ein Fehlererkennungssignal liefert, wobei diese zwei- oder mehrkreisig aufgebaut ist, wobei die einzelnen Kreise (I, II) vollständige, von den anderen Kreisen unabhängige Mikroprozessor-Systeme enthalten, in denen Eingangssignale verarbeitet und Fehlererkennungssignale (FAIL) erzeugt werden, und wobei bei einer Fehlererkennung in einem der Kreise ein Übergang des Regelungssystems in eine Notlauffunktion erfolgt, **dadurch gekennzeichnet, daß** jedem Kreis oder jedem Mikroprozessorsystem alle Eingangsdaten direkt oder über Kommunikationseinheiten, die die einzelnen Mikroprozessorsysteme verbinden, zugeführt werden und daß bei Ausfall eines Kreises durch Anschalten der Aktuatorbetätigung an einen der intakten Kreise die Aktuatoransteuerung in der Notlauffunktion ohne Einschränkungen fortgesetzt wird.

2. Schaltungsanordnung nach Anspruch 1, **dadurch gekennzeichnet, daß** die einzelnen Mikroprozessorsysteme (1,2) die Eingangsdaten bzw. -informationen redundant verarbeiten und beim Auftreten einer Abweichung zwischen den redundant gewonnenen Datenverarbeitungsergebnissen und/oder -zwischenergebnissen das Fehlererkennungssignal (FAIL) hervorrufen.

3. Schaltungsanordnung nach Anspruch 1 oder 2, **dadurch gekennzeichnet, daß** den Mikroprozessorsystemen (1,2) jeweils nur , die für die betreffenden Kreise (I,II) benötigten Eingangsdaten oder -informationen zugeführt werden.

4. Schaltungsanordnung nach Anspruch 1 oder 2, **dadurch gekennzeichnet, daß** jedem Mikroprozessorsystem (1,2) die für die gesamte Regelung benötigten Eingangsdaten oder -informationen zugeführt werden.

5. Schaltungsanordnung nach einem oder mehreren der Ansprüche 1 bis 4, **dadurch gekennzeichnet, daß** die Mikroprozessorsysteme (1,2) der einzelnen Kreise (I, II) durch Kommunikationseinheiten oder Datenaustauscheinheiten (11) untereinander verbunden sind.

6. Schaltungsanordnung nach einem oder mehreren der Ansprüche 1 bis 5, **dadurch gekennzeichnet, daß** jeder Kreis (I,II) bzw. jedes Mikroprozessorsystem (1,2) mit eigener Peripherie, nämlich mit eigener Energieversorgung (7,8), eigener Eingangsdaten- bzw. Signalerfassung (3,4) und/oder mit eigener Ausgangssignalauswertung oder Aktuatorbetätigung (5,6) ausgerüstet ist.

7. Schaltungsanordnung nach einem oder mehreren der Ansprüche 1 bis 6, **dadurch gekennzeichnet, daß** der Übergang in die Notlauffunktion durch Abschalten des fehlerhaften Kreises oder II) erfolgt.

8. Schaltungsanordnung nach einem oder mehreren der Ansprüche 1 bis 7, **dadurch gekennzeichnet, daß** der Übergang in die Notlauffunktion durch Abschalten des fehlerhaften Kreises (I oder II) und Anschalten bzw. Übernahme der Ausgangssignalauswertung oder Aktuatorbetätigung (6, 5) durch einen intakten Kreis erfolgt.

9. Schaltungsanordnung nach einem oder mehreren der Ansprüche 1 bis 8, **dadurch gekennzeichnet, daß** bei einem Fehler im Eingangsbereich, bei der Sensorsignalauswertung (3,4) etc. eine gemeinsame Nutzung bzw. Auswertung der korrekten Eingangsdaten durch alle Mikroprozessorsysteme (I,II) erfolgt.

10. Schaltungsanordnung nach einem oder mehreren der Ansprüche 1 bis 9, **dadurch gekennzeichnet, daß** diese zwei komplette Mikroprozessorsysteme (1,2) mit eigener Peripherie umfaßt und zur Steuerung und/oder Regelung einer Kraftfahrzeug-Bremsanlage vorgesehen ist und daß jeder Kreis die Bremsen einer Fahrzeug-Diagonalen oder einer Fahrzeugachse ansteuert.

11. Schaltungsanordnung nach einem oder mehreren der Ansprüche 1 bis 10, **dadurch gekennzeichnet, daß** diese für mehrere oder eine Kombination von Kraftfahrzeug-Regelungssystemen, wie Brake-by-wire, ABS, ASR, ASMS etc., ausgelegt ist und daß die Notlauffunktion die Aufrechterhaltung des Betriebs aller Regelungssysteme erfaßt.

12. Schaltungsanordnung nach einem oder mehreren der Ansprüche 1 bis 10, **dadurch gekennzeichnet, daß** diese für mehrere oder eine Kombination von Kraftfahrzeug-Regelungssystemen ausgelegt ist und daß die Notlauffunktion auf die Aufrechterhaltung des Betriebs ausgewählter Regelungsfunktionen, z.B. besonders sicherheitskritischer Funktionen, beschränkt ist.

## Claims

1. Circuit arrangement for use in an automotive vehicle control system, more particularly, for safety-critical control systems, such as ABS, TCS, ASMS, brake-by-wire, etc., including a microcomputer system processing the input data or input information of the control system and delivering an error identification signal when an error occurs, wherein the circuit arrangement has a dual-circuit or multiple-circuit design, and the individual circuits (I, II) comprising complete microprocessor systems being independent of the other circuits, in which input signals are processed and error identification signals (FAIL) are generated, and with a transition of a control system to an emergency operation mode taking place when an error is identified in one of the circuits, **characterized in that** all input data is sent to each circuit or each microprocessor system directly or by way of communication units connecting the individual microprocessor systems, and **in that** upon failure of one circuit, the actuator control in the emergency operation mode is continued without restrictions by connecting the actuator control to one of the intact circuits.

2. Circuit arrangement as claimed in claim 1,
**characterized in that** the individual microprocessor systems (1, 2) redundantly process the input data or information and generate the error identification signal (FAIL) in the event of a discrepancy between the redundantly achieved data-processing results and/or intermediate results.

3. Circuit arrangement as claimed in claim 1 or claim 2,
**characterized in that** the microprocessor systems (1, 2) are furnished only with those input data or information being required for the respective circuits (I, II).

4. Circuit arrangement as claimed in claim 1 or claim 2,
**characterized in that** the input data or information required for the entire control is sent to each microprocessor system (1, 2).

5. Circuit arrangement as claimed in any one or more of claims 1 to 4,
**characterized in that** the microprocessor systems (1, 2) of the individual circuits (I, II) are interconnected by communication units or data exchange units (11).

6. Circuit arrangement as claimed in any one or more of claims 1 to 5,
**characterized in that** each circuit (I, II) or each microprocessor system (1, 2) is equipped with a periphery of its own, i.e., with an individual energy supply (7, 8), individual input data or signal recording (3, 4), and/or with an output signal evaluation or actuator activation (5, 6) of its own.

7. Circuit arrangement as claimed in any one or more of claims 1 to 6,
**characterized in that** the transition to the emergency operation mode is effected by disconnection of the failing circuit (I or II).

8. Circuit arrangement as claimed in any one or more of claims 1 to 7,
**characterized in that** the transition to the emergency operation mode is effected by disconnection of the failing circuit (I or II) and connection or take-over of the output signal evaluation or actuator activation (6, 5) by an intact circuit.

9. Circuit arrangement as claimed in any one or more of claims 1 to 8,
**characterized in that** upon the occurrence of an error in the inlet area, in the sensor signal evaluation (3, 4), etc., the correct input data is jointly used and/or evaluated by all microprocessor systems (I, II).

10. Circuit arrangement as claimed in any one or more of claims 1 to 9, **characterized in that** the circuit arrangement comprises two complete microprocessor systems (1, 2) having each a periphery of its own, and is intended for the control and/or regulation of an automotive vehicle brake system, and **in that** each circuit actuates the brakes of a vehicle diagonal or a vehicle axle.

11. Circuit arrangement as claimed in any one or more of claims 1 to 10,
**characterized in that** the circuit arrangement is laid out for a plurality of or a combination of automotive vehicle control systems, such as brake-by-wire, ABS, TCS, ASMS, etc., and **in that** the emergency operation mode covers maintaining the operation of all control systems.

12. Circuit arrangement as claimed in any one or more of claims 1 to 10,
**characterized in that** the circuit arrangement is laid out for a plurality of or a combination of automotive vehicle control systems, and **in that** the emergency operation mode is limited to maintaining the operation of selected control functions, for example, safety-critical functions in particular.

## Revendications

1. Agencement de circuits pour un système de régulation de véhicule automobile, en particulier pour des régulations critiques sur le plan de la sécurité, telles que ABS, ASR, ASMS, « BRAKE-BY-WIRE », etc., comportant un système microinformatique qui traite les données d'informations d'entrée du système de régulation et qui, à l'apparition d'un défaut, fournit un signal de reconnaissance de défaut, cet agencement de circuits étant constitué de deux circuits ou plus, les différents circuits (I, II) contenant des systèmes complets de microprocesseurs, indépendants des autres circuits, dans lesquels les signaux d'entrée sont traités et les signaux de reconnaissance de défaut (fail) sont produits, et en cas de reconnaissance d'un défaut dans l'un des circuits, le système de régulation passant à un fonctionnement de secours, **caractérisé en ce qu'**à chaque circuit ou à chaque système de microprocesseurs sont amenées toutes les données d'entrée directement ou à travers des unités de communication qui relient les différents systèmes de microprocesseurs et **en ce qu'**en cas de défaillance d'un circuit, par activation de mécanisme d'action sur l'un des circuits intact, la commande de l'actionneur est poursuivie sans limitation dans la fonction de secours.

2. Agencement de circuits selon la revendication 1, **caractérisé en ce que** les différents systèmes de microprocesseurs (1, 2) traitent de manière redondante les données ou informations d'entrée et, qu'à l'apparition d'un écart entre les résultats du traitement de données obtenus de manière redondante et/ou les résultats intermédiaires, le signal de défaillance (FAIL) est activé.

3. Agencement de circuits selon la revendication 1 ou 2, **caractérisé en ce que** seules les données ou informations d'entrée nécessaires aux circuits (I, II) concernés sont amenées aux systèmes de microprocesseur (1, 2).

4. Agencement de circuits selon la revendication 1 ou 2, **caractérisé en ce que** les données ou informations d'entrée nécessaires à l'ensemble de la régulation sont amenées à chaque système de microprocesseurs (1, 2).

5. Agencement de circuits selon une ou plusieurs des revendications 1 à 4, **caractérisé en ce que** les systèmes de microprocesseurs (1, 2) des différents circuits (I, II) sont reliés entre eux par des unités de communication ou des unités d'échange de données (11).

6. Agencement de circuits selon une ou plusieurs des revendications 1 à 5, **caractérisé en ce que** chaque circuit (I, II) ou chaque système de microprocesseurs (1, 2) est équipé de ses propres périphériques, à savoir de sa propre alimentation en énergie (7, 8), de sa propre saisie des données d'entrée ou de signaux (3, 4) et/ou de son propre système d'exploitation des signaux de sortie ou de son propre mécanisme actualiseur (5, 6).

7. Agencement de circuits selon une ou plusieurs des revendications 1 à 6, **caractérisé en ce que** le passage en mode de secours s'effectue par mise hors service du circuit défectueux (I ou II).

8. Agencement de circuits selon une ou plusieurs des revendications 1 à 7, **caractérisé en ce que** le passage en mode de secours s'effectue par mise hors service du circuit défectueux (I ou II) et mise en service ou reprise du dispositif d'exploitation des signaux de sortie ou de l'actionnement d'actionneur (6, 5) par un circuit intact.

9. Agencement de circuits selon une ou plusieurs des revendications 1 à 8, **caractérisé en ce que** dans le cas d'un défaut dans la zone d'entrée dans le dispositif d'exploitation des signaux des capteurs (3, 4, etc.), il se produit une utilisation ou exploitation commune des données d'entrée correctes par tous les systèmes de microprocesseurs (I, II).

10. Agencement de circuits selon une ou plusieurs des revendications 1 à 9, **caractérisé en ce que** celui-ci comprennent deux systèmes de microprocesseurs (1, 2) complets avec leurs propres périphériques, et est prévu pour la commande et/ou la régulation d'un système de freinage de véhicule automobile, et **en ce que** chaque circuit commande les freins d'une diagonale de véhicule ou d'un essieu de véhicule.

11. Agencement de circuits selon une ou plusieurs des revendications 1 à 10, **caractérisé en ce que** celui-ci soit conçu pour plusieurs ou pour une combinaison de systèmes de régulation de véhicule automobile, tels que « RAKE-BY-WIRE », ABS, ASR, ASMS, etc., et **en ce que** la fonction de secours comprend le maintien du fonctionnement de tous les systèmes de régulation.

12. Agencement de circuits selon une ou plusieurs des revendications 1 à 10, **caractérisé en ce que** celui-ci soit conçu pour plusieurs ou pour une combinaison de systèmes de régulation de véhicule automobile et **en ce que** la fonction de secours soit limitée au maintien du fonctionnement de la fonction de régulation sélectionnée, par exemple des fonctions particulièrement critiques sur le plan de la sécurité.
